## Europäisches Patentamt
## European Patent Office
## Office européen des brevets

(11) Veröffentlichungsnummer: **0 072 956**
**B1**

(19)

## (12) EUROPÄISCHE PATENTSCHRIFT

(45) Veröffentlichungstag der Patentschrift:
04.11.87

(51) Int. Cl.⁴: **B 60 C 15/04,** B 60 C 15/06

(21) Anmeldenummer: **82107169.3**

(22) Anmeldetag: **09.08.82**

(54) **Hochbelastbarer Fahrzeugreifen.**

(30) Priorität: **20.08.81 DE 3132941**

(43) Veröffentlichungstag der Anmeldung:
**02.03.83 Patentblatt 83/9**

(45) Bekanntmachung des Hinweises auf die Patenterteilung:
**04.11.87 Patentblatt 87/45**

(84) Benannte Vertragsstaaten:
**AT BE DE FR GB IT LU NL SE**

(56) Entgegenhaltungen:
**DE-A-3 047 669**
**DE-A-3 047 783**
**FR-A-1 594 780**
**FR-A-2 220 396**
**FR-A-2 373 406**
**FR-A-2 389 504**
**FR-A-2 390 299**
**FR-A-2 440 279**
**US-A-4 100 955**

(73) Patentinhaber: **BAYER AG, Konzernverwaltung RP Patentabteilung, D-5090 Leverkusen 1 Bayerwerk (DE)**

(72) Erfinder: **Ippen, Jakob, Dr., Schleiermacherstrasse 17, D-5090 Leverkusen (DE)**
Erfinder: **Stüttgen, Friedel, Albrecht- Dürer-Strasse 94, D-5024 Pulheim (DE)**

EP 0 072 956 B1

## Beschreibung

Die Erfindung betrifft einen Reifenfuß für Reifen von Lastkraftwagen, enthaltend einen im Querschnitt rhomben- oder parallelogrammförmigen Kern, dessen kleinster zur Fußzehe gerichteter Winkel 60 - 80 beträgt, mit einer weichen hochelastischen Kernkappe aus Kautschuk, einem Kernschutzstreifen, einem Wulstschutzband und einer Radialkarkasse, die im oberen Teil des Reifens ellipsenförmig verläuft, um dann unmittelbar an dem als Umschlag um den Kern bzw. die Kernkappe herumgeführten, U-förmigen Kernschutzstreifen anzuliegen.

Die Anforderungen hinsichtlich der Dauerbelastbarkeit von Fahrzeugreifen, insbesondere von sog. Super-single-Reifen für Lastkraftwagen, stellen an die Qualität des Reifenfußes hohe Ansprüche, da solche Reifen erfahrungsgemäß 80 000 bis 100 000 km gefahren und danach bis zu zweimal runderneuert werden, was einer Gesamtlaufleistung von ca. 300 000 km entspricht. Dabei hängt die Qualität der Runderneuerung unter anderem entscheidend vom einwandfreien Zustand des Reifenfußes ab. So führt z. B. eine Deformation im Bereich der Fußzehe nach der Runderneuerung zu Luftverlusten auf der Felge, die im Extremfall bis zum völligen Druckverlust führen kann.

Andererseits stellt man auch nach Langzeitgebrauch an der Außenseite des Reifenfußes Risse fest, die bis in das Innere des Reifenfußes hinein reichen. Solche Reifen sind dann für die Runderneuerung völlig unbrauchbar und auch im Betrieb sicherheitsgefährdend. Aus dem vorgenannten ergibt sich, daß der Konstruktion des Reifenfußes eine besondere Bedeutung zufällt.

Um entsprechende Fußdeformationen zu vermeiden, wurden in den Reifenfuß im Laufe der Zeit verschiedenartige Drahtkern-Systeme eingebaut. So ging die Entwicklung vom Hexagonal-Kern über den Flachoval-Kern bis zum heutigen Paketkern aus Flachdraht. Solche Paketkerne verlaufen in der Regel an der Grundseite parallel zur Felgenschräge, wobei i. a. die beiden aufsitzenden Schenkel mit der Grundseite einen Winkel von 90° bilden.

Bei herkömmlichen Reifen führt dies dazu, daß die Karkasse, die im oberen Teil des Reifens ellipsenförmig verläuft, beim Übergang in den Reifenfuß von der elliptischen Linienführung abweicht und deutlich höher verläuft. Am Wendepunkt, d. h. dem Auflagepunkt der Karkasse auf dem Drahtkern, erfolgt außerdem eine starke Richtungsänderung des Karkassenverlaufs, was zu zusätzlichen Spannungen in der Karkasse führt und erheblichen Einfluß auf die Reifenqualität hat.

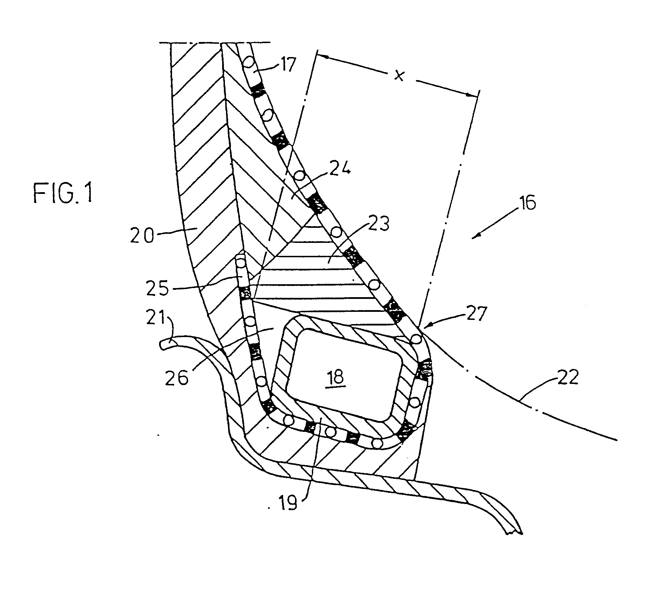

Zur Veranschaulichung ist in Fig. 1 ein Schnitt durch einen herkömmlichen Reifenfuß 16 dargestellt mit Karkasse 17, Drahtkern 18 mit Kernummantelung 19, Reifenseitenwand 20 und Felge 21. Die eingezeichnete Karkasslinie 22 verläuft höher als bei elliptischer Linienführung der Karkasse 3, die dadurch im Wendepunkt eine starke Richtungsänderung erfährt. Um die dadurch auftretenden Spannungen auszugleichen, muß der Drahtkern 18 vor dem Einbau vollständig mit Kautschuk ummantelt oder mit geeigneten Schutzstreifen umwickelt werden. Außerdem muß der Drahtkern 18 durch einen Kernreiter, der aus einem harten Kautschuk 23 und einem weicheren, elastischen Kautschuk 24 zusammengesetzt ist, abgedeckt werden. Darüber hinaus entsteht beim Einbau zwischen dem Drahtkern 18 und dem Karkassenumschlag 25 zunächst ein Hohlraum 26, der sich erst bei der Vulkanisation des Reifens schließt. Auch dies wird durch die herkömmliche Karkassenführung verursacht, durch die sich der eingezeichnete große Abstand x zwischen Wendepunkt 27 und Karkassenumschlag 25 ergibt, was einen relativ breiten Reifenfuß 16 erforderlich macht.

Bekannt ist ein gattungsgemäßer Gürtelreifen für Kleinlaster aus der US PS 4 100 955, bei dem die konzentrierte Beanspruchung der Felge durch den Radialkord über eine bessere Verteilung der Lasten mittels diagonal verlaufender Kord-Einlagen im Bereich zwischen Kern und halber Seitenwandhöhe reduziert wird. Diese Versteifung der Seitenwand verringert die elastische Federung und damit den Fahrkomfort.

Außerdem wird die kritische Biegestelle nur zur Reifenmitte hin verlagert.

Aufgabe der Erfindung ist es, die vorerwähnten Nachteile zu beheben. Insbesondere soll für einen schweren LKW ein Reifenfuß gefunden werden, der auch nach mehrfacher Rundeerneuerung trotz harter Dauerbelastung keine Risse und Deformationen aufweist, so daß ein fester Sitz bei großer Luftdichtigkeit während der gesamten Lebensdauer des Reifens gewährleistet werden kann.

Die Aufgabe wird bei einem gattungsgemäßen Reifen erfindungsgemäß dadurch gelöst, daß

a) der Reifenfuß einen gesonderten Humpstreifen aufweist,

b) die Enden des U-förmigen Kernschutzstreifens nur so weit um den Kern herumgeführt sind, daß die Karkasse die Kernkappe zumindest auf der Innenseite des Reifenfußes berührt und

c) das Wulstschutzband ein außenliegendes Textilgewebe ist, das oberhalb der Fußzehe beginnt und nach der Fußzehe zwischen Humpstreifen und dem Umschlag der Karkasse endet.

Der Reifen gemäß vorliegender Erfindung ist für alle Arten von Kraftfahrzeugen, insbesondere jedoch für Lastkraftwagen geeignet. Durch die erfindungsgemäß verbesserte Führung der Karkasse ist die Stabilität des Reifenfußes wesentlich vergrößert, so daß der Reifen eine erhöhte Lebensdauer und Belastbarkeit besitzt. Gleichzeitig kann der Reifenfuß schmaler gestaltet werden als bei herkömmlichen Reifen, so daß sich seine Masse und damit der Hitzestau verringert. Schließlich können auch Zusammenbau und Herstellung des Reifens einfacher und problemloser durchgeführt werden.

Durch eine verbesserte Führung der Karkasse mit tieferliegendem und zum Reifenseitenteil hin verschobenem Wendepunkt in Verbindung mit einem rhombenförmigen Kern kann die Karkasse bis in den Reifenfuß weitgehend oder vollständig ellipsenförmig geführt werden und erfährt am Wendepunkt nur noch eine leichte Richtungsänderung, wodurch unerwünschte Spannungen vermieden werden. Der rhombenförmige Kern kann aus jedem dafür geeigneten Material bestehen. Vorzugsweise wird ein Paketkern aus Flachdraht verwendet. Rhombenförmig im Sinne der Erfindung bedeutet, daß der Kern annähernd die Form eines Rhombus oder Parallelogramms hat, deren kleinere Winkel 60 - 80°, vorzugsweise 70 - 75° betragen.

Bei dem erfindungsgemäßen Reifen ist eine vollständige Ummantelung des Kerns vor dem Einbau nicht erforderlich. Es ist vielmehr ausreichend, wenn der Kern an drei Seiten U-förmig von einem Kernschutzstreifen umgeben ist, der nach oben zur Kernkappe hin offen ist. Dadurch wird auch ein leichterer Einbau ermöglicht, da der Kernschutzstreifen vorteilhafterweise zunächst auf die Karkasse aufdoubliert und dann zusammen mit dieser um den Kern herumgeschlagen werden kann.

Die Kernkappe sitzt vorzugsweise direkt auf der Oberseite des Kerns auf. Der äußere Schenkel des Kernschutzstreifens endet wahlweise oberhalb oder unterhalb des Umschlagsendes der Karkasse.

Die entsprechenden Teile des Reifens bzw. des Reifenfußes können aus den für die Reifenherstellung üblichen und bekannten Kautschuken oder Kautschukmischungen hergestellt werden. Für die aus hartem Kautschuk hergestellten Teile wie z. B. dem Humpstreifen werden vorzugsweise Kautschuke mit einer Shore A Härte von 75 - 90 verwendet. Für die aus weichem, hochelastischem Kautschuk hergestellten Teile wie z. B. der Kernkappe werden vorzugsweise Kautschuke mit einer Shore A Härte von 45 - 65 verwendet.

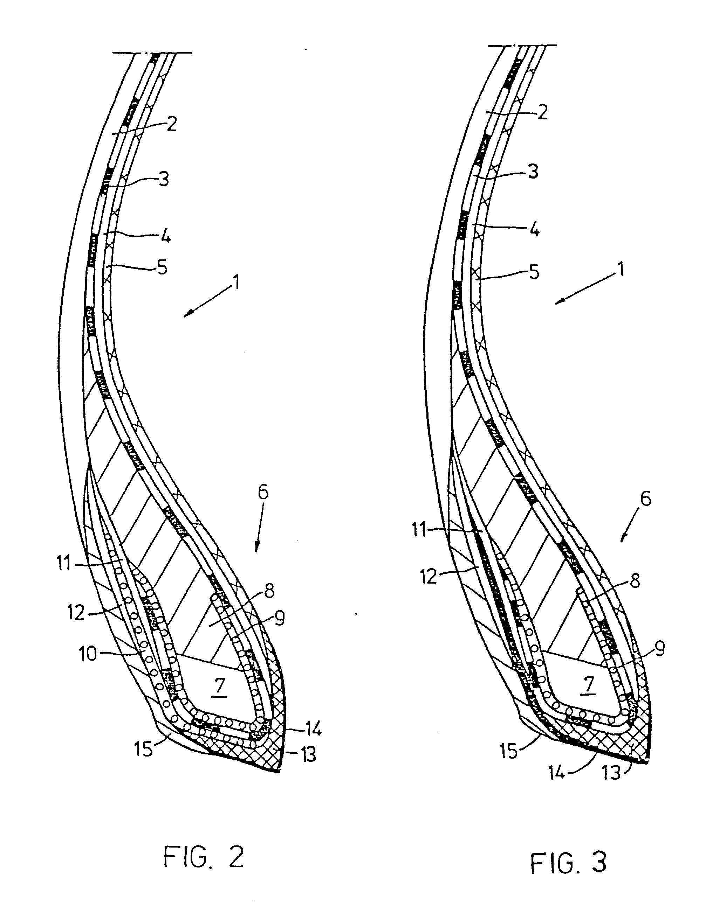

Ein Beispiel der Erfindung ist in den Figuren 2 und 3 dargestellt, die nachstehend beschrieben werden.

In der Fig. 2 ist ein Teil eines Radialreifens 1 dargestellt, der in halber Reifenhöhe aus Seitenwand 2, Karkasse 3, Innengummi 4 und Tubelessplatte 5 besteht. Der Reifenfuß 6 besitzt einen parallelogrammförmigen Kern 7, der in Richtung Felge und Seitenflächen von einem Kernschutzstreifen 9 umgeben und oben mit einer Kernkappe 8 abgedeckt ist. Um diese Teile ist die Karkasse 3 geschlagen, wobei der Umschlag außen mindestens 20 mm unterhalb des Randes des Kernschutzstreifens 9 endet. Als nächste Lage folgt ein Stahlwulstband 10, welches sich von der Felgenseite in einen Bereich zwischen weichelastischem Wulststreifen 11 und Seitenteilstreifen 12 erstreckt. Die außen angebrachte, aus einem harten Kautschuk mit niedrigem Compressions-Set bestehende, Fußzehe 13 ist durch ein entlang der Oberfläche liegendes Wulstschutzband aus Textilgewebe 14 verstärkt, das 20 - 60 mm oberhalb der Fußzehen 13 beginnt, nach der Fußzehe 13 innen am Humpstreifen 15 anliegt, um schließlich am Stahlwulstband 10 zu enden.

In Fig. 3 ist ein ähnlicher Reifenfuß 6 dargestellt, der sich dadurch unterscheidet, daß unter Fortlassen des Stahlwulstbandes das Textilgewebe 14 in den Reifenfuß 6 20 mm oberhalb des Endes der Karkasse 3 hochgezogen ist, wo es wiederum zwischen Wulststreifen 11 und Seitenteilstreifen 12 festgehalten ist.

**Patentansprüche**

1. Reifenfuß (6) für Reifen von Lastkraftwagen, enthaltend einen im Querschnitt rhomben- oder parallelogrammförmigen Kern (7), dessen kleinster zur Fußzehe (13) gerichteter Winkel 60° - 80° beträgt, mit einer weichen hochelastischen Kernkappe (8) aus Kautschuk, einem Kernschutzstreifen (9), einem Wulstschutzband (14) und einer Radialkarkasse (3), die im oberen Teil des Reifens ellipsenförmig verläuft, um dann unmittelbar an dem als Umschlag um den Kern (7) bzw. die Kernkappe (8) herumgeführten, U-förmigen Kernschutzstreifen (9) anzuliegen, dadurch gekennzeichnet, daß

a) der Reifenfuß (6) einen gesonderten Humpstreifen (15) aufweist,

b) die Enden des U-förmigen Kernschutzstreifens (9) nur so weit um den Kern (7) herumgeführt sind, daß die Karkasse (3) die Kernkappe (8) zumindest auf der Innenseite des Reifenfußes (6) berührt und

c) das Wulstschutzband ein außenliegendes Textilgewebe (14) ist, das oberhalb der Fußzehe (13) beginnt und nach der Fußzehe (13) zwischen Humpstreifen (15) und dem Umschlag der Karkasse (3) endet.

2. Reifenfuß nach Anspruch 1, dadurch gekennzeichnet, daß der Humpstreifen (15) direkt an der Kernkappe (8) undder umgeschlagenen Karkasse (3) anliegt und der äußere Schenkel des Kernschutzstreifens (9) mindestens 20 mm oberhalb des Umschlagendes der Karkasse (3) endet.

3. Reifenfuß nach Anspruch 1, dadurch gekennzeichnet, daß der Reifenfuß durch ein Stahlwulstband (10) verstärkt ist, das unterhalb des Kerns (7) beginnt, wo es zwischen Karkasse (3) und Humpstreifen (15) angeordnet ist und das im Bereich des Auslaufes des Humpstreifens (15) endet, wo es zwischen einem Seitenteilstreifen (12) und einem Wulststreifen (11) eingebettet ist.

4. Reifenfuß nach Anspruch 3, dadurch gekennzeichnet, daß die Fußzehe (13) aus Kautschuk mit einer Shore A-Härte von 75 - 90 besteht und daß das außenliegende Textilgewebe (14) 20 - 60 mm oberhalb der Fußzehe (13) beginnt und am Stahlwulstband (10) endet.

5. Reifenfuß nach Anspruch 1, dadurch gekennzeichnet, daß die Fußzehe (13) aus Kautschuk mit einer Shore A-Härte von 75 - 90 besteht, daß das außenliegende Textilgewebe (14) 20 - 60 mm oberhalb der Fußzehe (13) beginnt und nach Einführung in den Reifenfuß (6) zwischen Fußzehe (13) und Humpstreifen (15) etwa 10 - 20 mm oberhalb des Umschlagendes der Karkasse (3) zwischen Seitenteilstreifen (12) und Wulststreifen (11) endet.

**Claims**

1. Tyre base (6) for lorry tyres, containing a core (7) which has a rhombic or parallelogram-shaped cross-section and the smallest angle of which, directed towards the toe (13), is 60° - 80°, with a soft highly elastic rubber core cap (8), a core-protecting strip (9), a bead-protecting band (14) and a radial carcass (3) which extends elliptically in the upper part of the tyre and then lies directly against the U-shaped core-protecting strip (9) which extends around the core (7) and the core cap (8) in the form of a sheath, characterised in that

a) the tyre base (6) has a separate hump strip (15),

b) the ends of the U-shaped core-protecting strip (9) extend around the core (7) only to such an extent that the carcass (3) touches the core cap (8) at least on the inside of the tyre base (6) and

c) the bead-protecting band is an external textile fabric (14) which begins above the toe (13) and, after the toe (13), ends between the hump strip (15) and the folded back part of the carcass (3).

2. Type base according to Claim 1, characterised in that the hump strip (15) lies directly against the core cap (8) and the folded back carcass (3) and the outer side of the core-protecting strip (9) ends at least 20 mm above the end of the folded back part of the carcass (3).

3. Tyre base according to Claim 1, characterised in that the tyre base is reinforced by a steel bead band (10) which begins beneath the core (7), where it is arranged between the carcass (3) and the hump strip (15), and ends in the region of the end of the hump strip (15), where it is embedded between a side part strip (12) and a bead strip (11).

4. Tyre base according to Claim 3, characterised in that the toe (13) consists of rubber with a Shore A hardness of 75 - 90 and in that the external textile fabric (14) begins 20 - 60 mm above the toe (13) and ends on the steel bead band (10).

5. Tyre base according to Claim 1, characterised in that the toe (13) consists of rubber with a Shore A hardness of 75 - 90, in that the external textile fabric (14) begins 20 - 60 mm above the toe (13) and, after passing into the tyre base (6) between the toe (13) and the hump strip (15) ends about 10 - 20 mm above the end of the folded back part of the carcass (3) between the side part strip (12) and the bead strip (11).

**Revendications**

1. Talon (6) pour bandages pneumatiques de camions, ce talon comportant une tringle (7) à section transversale en forme de rhomboïde ou de parallélogramme dont le plus petit angle dirigé vers la pointe de talon (13) est de 60-80°, avec un recouvrement de tringle (8) en caoutchouc souple et de haute élasticité, une bandelette de protection de tringle (9), une bande de protection de bourrelet (14) et une carcasse radiale (3) qui s'étend en forme d'ellipse dans la partie supérieure du bandage pneumatique pour venir ensuite s'appliquer directement sur la bandelette de protection de triangle (9) en U passant sous forme d'un retournement autour de la tringle (7) ou du recouvrement de tringle (8), caractérisé en ce que:

a) le talon (6) comporte une bandelette "hump" séparée (15),

b) les extrémités de la bandelette de protection de tringle (9) en U ne passent autour de la tringle (7) que sur une distance calculée de telle sorte que la carcasse (3) entre en contact avec le recouvrement de tringle (8) au moins sur la face intérieure du talon (6), et

c) la bande de protection de bourrelet est un tissu textile extérieur (14) qui commence au-dessus de la pointe de talon (13) et se termine après cette dernière entre la bandelette "hump" (15) et le retournement de la carcasse (3).

2. Talon de bandage pneumatique selon la revendication 1, caractérisé en ce que la bandelette "hump" (15) vient s'appliquer directement sur le recouvrement de tringle (8) et la carcasse retournée (3), tandis que la branche extérieure de la bandelette de protection de tringle (9) se termine au moins à 20 mm au-dessus de l'extrémité du retournement de la carcasse (3).

3. Talon de bandage pneumatique selon la revendication 1, caractérisé en ce qu'il est renforcé par une bande de bourrelet en acier (10) qui commence en dessous de la tringle (7) où elle est disposée entre la carcasse (3) et la bandelette "hump" (15), pour se terminer dans la zone de la sortie de la bandelette "hump" (15) où elle est enrobée entre une bandelette partielle latérale (12) et une bandelette de bourrelet (11).

4. Talon de bandage pneumatique selon la revendication 3, caractérisé en ce que la pointe de talon (13) est constituée de caoutchouc d'une dureté Shore A de 75-90, tandis que le tissu textile extérieur (14) commence à 20-60 mm au-dessus de la pointe de talon (13) et se termine à la bande de bourrelet en acier (10).

5. Talon de bandage pneumatique selon la revendication 1, caractérisé en ce que la pointe de talon (13) est constituée de caoutchouc d'une dureté Shore A de 75-90, tandis que le tissu textile extérieur (14) commence à 20-60 mm au-dessus de la pointe de talon (13) et, après son introduction dans le talon (6), il se termine entre la pointe de talon (13) et la bandelette "hump" (15) à environ 10-20 mm au-dessus de l'extrémité du retournement de la carcasse (3) entre la bandelette partielle latérale (12) et la bandelette de bourrelet (11).

FIG.1

FIG. 2

FIG. 3